# EUROPEAN PATENT SPECIFICATION

(11) **EP 4 140 866 B1**
(45) Date of publication and mention of the grant of the patent: **22.10.2025**
(21) Application number: 22188940.5
(22) Date of filing: 05.08.2022
(51) Int. Cl.: B62J 17/083, B62J 17/10, B62K 3/00

(54) **HINGE SYSTEM FOR MANOEUVRING A CANOPY TO AND FROM A CLOSED POSITION ON A VELOMOBILE, AND A VELOMOBILE**
SCHARNIERSYSTEM FÜR DAS MANÖVRIEREN EINES VERDECKES IN UND AUS EINER GESCHLOSSENEN POSITION AUF EINEM VELOMOBIL UND VELOMOBIL
SYSTÈME DE CHARNIÈRE POUR MAN UVRER UN AUVENT VERS ET DEPUIS UNE POSITION FERMÉE SUR UN VÉLOMOBILE, ET VÉLOMOBILE

(30) Priority: 27.08.2021 NO 20211030
(43) Date of publication of application: 01.03.2023
(73) Proprietor: PODBIKE AS, 4031 Stavanger (NO)
(72) Inventor: Sørensen, Per Hassel, 4307 SANDNES (NO)
(74) Representative: Håmsø Patentbyrå AS

(56) References cited:
- CN-U- 201 980 340
- CN-U- 210 852 741
- DE-A1- 102008 047 490
- JP-A- 2000 168 659
- JP-A- H07 127 095

## Description

The present invention relates to a velomobile comprising a canopy and a hinge system for manoeuvring the canopy to and from a closed position on the velomobile.

Nowadays, velomobiles are becoming a key solution in the global shift towards green technologies. A velomobile is a human-powered vehicle enclosed for aerodynamic advantage and/or protection from weather and collisions. It is similar to a recumbent bicycle, pedal go-karts and tricycles but it includes a full fairing, *i.e.* an aerodynamic or weather protective shell. Some velomobiles provide part of the protective shell in the form of a canopy that can be opened and closed. In some cases, the canopy is a transparent enclosure similar to an aircraft canopy.

The ability to open and close a velomobile canopy is an important aspect for the usability of a velomobile. An opened velomobile canopy can provide a user with access to the interior of the vehicle and allow the entrance into and exit from the vehicle. On the other hand, a closed velomobile canopy is useful both when the user is outside and inside of the vehicle. When the user is outside of the velomobile, the closed canopy can be important for security purposes, such as keeping the vehicle closed and locked when parked in a public parking area. When the user is inside of the velomobile, the closed canopy can be important for a few reasons:
- Improving the performance of the velomobile by minimizing drag, *i.e.* the retarding force acting on the velomobile moving through air parallel and opposite to the direction of motion.
- Protecting the user from the weather (*e.g*. rain, snow and cold temperatures).
- Increasing the user's safety against injury and/or damage from collisions.
- Creating a fully sealed cabin having ventilation with purified air, which can be highly desirable. For example, many people have allergies, and they can have difficulty using regular bicycles when there are a lot of allergens in the air, some even needing special face masks to avoid exposing themselves to the allergens. Requiring the use of a mask when riding a human-powered vehicle is not ideal. With a velomobile having a fully sealed cabin, it is possible to provide air ventilation using high power electric fan equipped with a high-efficiency particulate air (HEPA) filter. Also, the cabin may need to be slightly over pressured to make sure that all the air entering the cabin is fed through the filter.

It can be challenging to provide a velomobile with a canopy that can be closed correctly both when a user is and is not present inside of the velomobile. Usually, a velomobile's body will bend slightly when subjected to the weight of a user and the resulting bending effect or flexure can impede the canopy from closing correctly. The bending effect mainly results from the materials, components and design provided for the body of the velomobile, which are typically chosen to minimize the total weight of the vehicle. For example, velomobile producers typically prefer using lightweight materials, such as aluminium and carbon fibre, and choosing component designs that require a minimal amount of material. A bent velomobile body can change the relative position(s) of the contact points or surface of the canopy on the body, which in turn leads to an incompatibility between the body and the canopy. With a bent velomobile body, the canopy may not be able to be closed correctly, which can lead to problems such as not having a full seal of the canopy against the velomobile body, the canopy not being correctly fastened to the velomobile body and the canopy being damaged while the vehicle is driven over turbulent terrain.

A known approach to solve this challenge is to change the body of the velomobile in order to minimize the bending effect in reaction to the user's weight. In particular, changing the body may include providing the body with bigger components, thicker parts and/or stronger materials. This approach has however a few drawbacks. First, it substantially increases the total weight of the vehicle, which in turn has negative consequences for a velomobile producer, such as making the vehicle more expensive and difficult to manufacture and transport, and for a velomobile user, such as making the vehicle expensive and difficult (and unpleasant) to ride when climbing a hill. Secondly, it has been observed in practice that the bending effect will still occur, even if to a smaller extent. Thus, increasing the stiffness of the velomobile body will not fully eliminate the bending effect and can still lead to an incorrect closing of the canopy.

Another approach for stiffening the velomobile body is to design the latter with raised sides so that a user needs to enter and exit the velomobile in a fashion similar to entering and exiting a canoe. This approach makes it harder to enter and leave the vehicle, especially since most velomobiles are narrow and the seat is low for achieving a low centre of gravity to reduce the risk of having the vehicle falling over to its side during turns. Also, this approach reduces the usability of the vehicle, and many users, in particular the elderly, will likely have difficulty entering and even more difficulty when leaving vehicle with high sides.

A similar approach to the latter is to design the velomobile with a fixed roof providing stiffness, which is an approach typically observed with car manufacturers. This approach has the drawback of adding extra weight high up, raising the centre of gravity and increasing the risk of the velomobile tipping over. This approach also adds obstructions to the view of the user in the form of A-pillars or similar structural members between the roof and the front of vehicle to provide stiffness.

JP 2000 168659 A discloses a vehicle comprising a canopy and hinge system according to the preamble of claim 1.

### Summary

The invention will now be disclosed and has for its object to remedy or to reduce at least one of the drawbacks of the prior art, or at least provide a useful alternative to the prior art. The object is achieved through features, which are specified in the description below and in the claims that follow. The invention is defined by the independent patent claim and the dependent claims define advantageous embodiments of the invention.

According to a first aspect of the invention, there is provided a velomobile comprising a canopy and a hinge system for manoeuvring the canopy to and from a closed position on the velomobile. The hinge system comprises at least two hinges operating in parallel, each hinge being for rotating the canopy relative to the velomobile about an axis of rotation. Also, a radius between the canopy and the axis of rotation of at least one of the hinges is adjustable for mitigating a misalignment between the canopy and the velomobile when closing the canopy. Each hinge having an adjustable radius between the canopy and the axis of rotation of the hinge comprises a telescoping mechanism for changing the adjustable radius. The telescoping mechanism comprises a connection piece adapted to be connected to the canopy. Also, the connection piece comprises a surface for matching a slidable surface on the hinge so that the radius between the canopy and the axis of rotation of the hinge is changeable by sliding the connection piece on the hinge.

It has been realised that correctly closing a canopy on a velomobile, even if the velomobile is bent due to a user's weight, can be achieved by a hinge system having parallel hinges in which it is possible to adjust a radius between the canopy and the axis of rotation of at least one of the hinges when closing the canopy. The parallel hinges cause the canopy to move to and from the closed position in a robust manner by maintaining the canopy with a predictable orientation while the canopy is moved. The possibility of radial adjustment permits aligning the canopy with a closed position that is accepted by a bent velomobile, which is likely different than the closed position that is accepted by the same velomobile in a non-bent state. Thus, the apparatus provides the advantages of manoeuvring the canopy with parallel hinges and the advantage of being able to do a simple adjustment if appropriate and closing the canopy correctly, even when the velomobile is bent due to a user's weight.

This solution goes against the idea of overcoming the possible misalignments between the canopy and the velomobile by adapting the body of the velomobile or by adapting both the body of the velomobile and an apparatus for manoeuvring the canopy on the velomobile. Advantageously, a velomobile manufacturer can design a velomobile with thinner parts, that is lighter and/or that is more comfortable to ride, and which is expected to accept some degree of bending effects due to a user's weight. Moreover, it can be seen that the possibility of achieving a radial adjustment in at least one hinge does not add a significant weight to the velomobile and can be implemented without high costs and complexity by a velomobile manufacturer. Also, it is advantageous that an existing velomobile can be retrofitted with an hinge system according to the first aspect.

Although it may require manufacturing steps for the adapted hinge, providing the telescoping mechanism can be a robust solution for opening and closing the canopy in windy conditions or while the velomobile is laterally parked on slopes. A hinge with the telescoping mechanism can allow the radius between the canopy and the axis of rotation of the hinge to be adjustable while being robust against lateral forces applied on the canopy while the latter is being manoeuvred.

The slidable surface can be shaped so that the connection piece is allowed to have only one degree of freedom when sliding on the hinge. This is advantageous in that the extendable mechanism is capable of performing its intended motions without allowing the connection piece to slide in undesired or unexpected degrees of freedom, such as a degree of freedom to rotate about a radius formed between the canopy and the axis of rotation of a hinge.

The connection piece and the hinge can comprise a channel on one of them and a protrusion on the other. The channel and the protrusion may be adapted so that, when the connection piece slides on the hinge, the connection piece is guided by the protrusion moving through the channel. This is advantageous in that in provides further options for configuring and/or constraining the possible motions for the connection piece relative to the respective hinge.

In some embodiments, each hinge having an adjustable radius between the canopy and the axis of rotation of the hinge can be adapted to allow the adjustment of the radius by at most two centimetres. A maximum radial adjustment of two centimetres is typically sufficient to compensate for misalignments between the canopy and the closed position of the canopy on the velomobile, the misalignments being caused by bending effects produced by a user's weight on the velomobile. Also, this maximum radial adjustment is small enough so that a change of the radius between the canopy and the axis of rotation of a hinge does not affect the canopy's opening operation substantially. Moreover, this adjustment is not long enough that wind and lateral inclination may sabotage the hinge system's ability to manoeuvre the canopy to and from a closed position on a velomobile.

Each hinge can comprise at least one elongated piece for supporting the canopy at a radius from the axis of rotation of the hinge. Each elongated piece may be recognised by the skilled person as an arm of the hinge. At least one hinge can comprise at least two elongated pieces, each of the at least two elongates pieces being for supporting the canopy at a radius from the same axis of rotation of the hinge. Having a plurality of elongated pieces can be advantageous in achieving an increased robustness against wind or gravitational forces when parking laterally on slopes. Moreover, each elongated piece can comprise a flexible material so that the radius at which the canopy is supported by the elongated piece is changeable by bending the elongated piece. Although providing a hinge with a flexible elongated piece may not be ideal when opening the canopy in windy conditions or when the velomobile is parked laterally on slopes, the manufacturing process for the adapted hinge may be easier as only a single piece, *i.e.* the bendable elongated piece, can be provided. The flexible material may be, for example, any of the materials used in known flexible tent poles. For example, the flexible material may be any of fibre glass, aluminium or carbon fibre.

In some embodiments, each hinge comprises a rotary joint for connecting the hinge with the canopy. The rotary joint can be advantageous for controlling the orientation of the canopy during the parallel rotation of the hinges manoeuvring the canopy to and from a closed position on the velomobile body. The rotary joint can also increase the number of velomobile deformations that the apparatus accepts while still correctly performing closing and opening operations for the canopy.

In another embodiment, the hinge system comprises at least one fastening device for fastening the canopy to the velomobile when the canopy is on the closed position. The at least one fastening device can be operated in at least the following modes of fastening: a sealed mode wherein the canopy, on the closed position, forms a seal against the velomobile; and a ventilated mode wherein the canopy, on the closed position, is misaligned with the velomobile so that an opening is created between the canopy and the velomobile for providing ventilation through the opening.

It can be seen that the two modes of fastening make two positions of the canopy to be considered as closed positions: one in which there is a seal formed between the canopy and the velomobile; and another in which the at least one fastener fastens the canopy to the velomobile but in which there is a ventilation opening between the canopy and the velomobile.

Advantageously, the system enables a vehicle to be more practical for use in both hot and cold weather, as the user may operate the at least one fastener to the perform the mode of fastening that is most useful or comfortable. The at least one fastening device can be adapted to fasten the canopy on a first position for the sealed mode and a second position for the ventilated mode. Thus, with such a fastening device embodiment, the user can set the fastening device on the first position to achieve a full seal between the vehicle and the canopy. Should it become necessary or preferrable for the user, the at least one fastening device can be switched to the second position and a ventilation opening is created to increase the exchange of air. This approach for providing a ventilated mode of fastening is simple to implement and goes against the idea of requiring a more complicated adaptation of the velomobile to provide a ventilated habitat within the velomobile while still allowing the use of the canopy in a closed position.

### Detailed description

Embodiments of the invention will now be described, by way of example only, with reference to the accompanying drawings, in which:
- Figure 1: is a perspective schematic view of a hinge system embodiment;
- Figures 2A-2B: are perspective views of a telescoping mechanism embodiment, the two figures showing the telescoping mechanism extended and retracted;
- Figures 3A-3B: are perspective views of a connection piece embodiment that is part of the telescoping mechanism shown in Figures 2A-2B, the connection piece being shown from two points of view;
- Figures 4A-4B: are elevation schematic views of a bent velomobile embodiment with a canopy on an open position and a closed position, respectively;
- Figure 5: is an elevation schematic view of a velomobile with a canopy in a closed position while providing a ventilation opening.

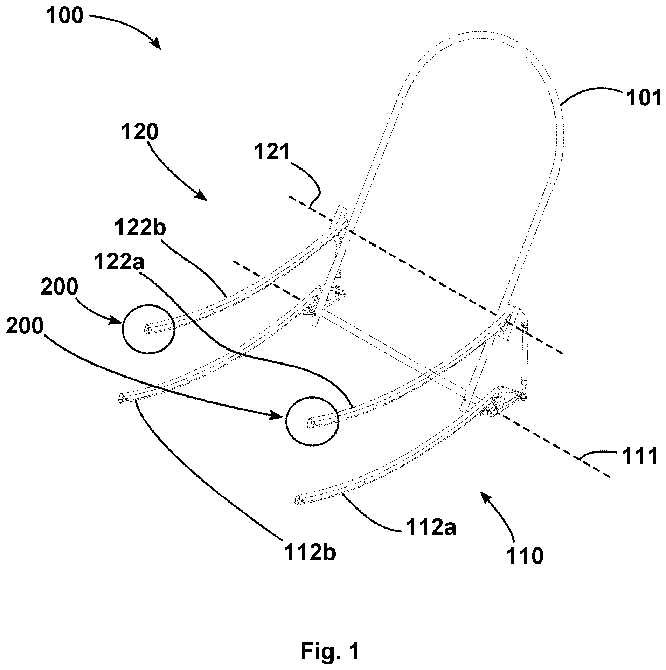

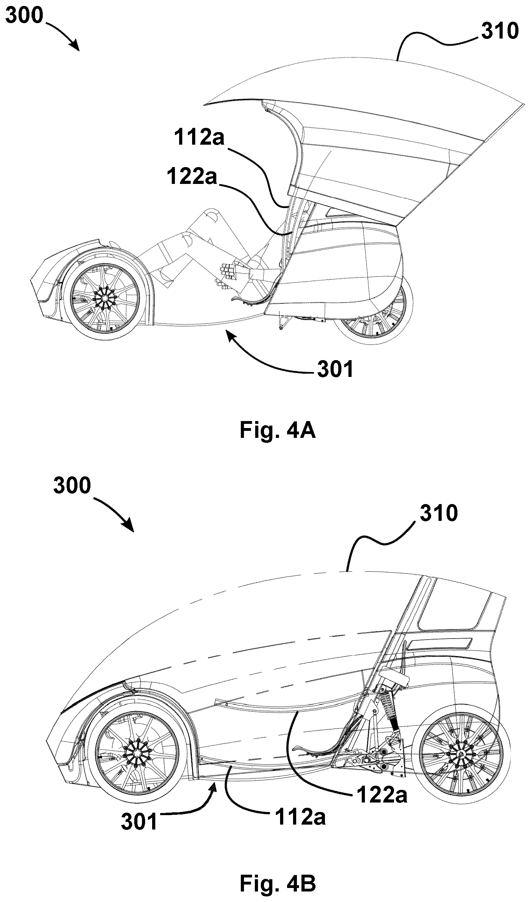

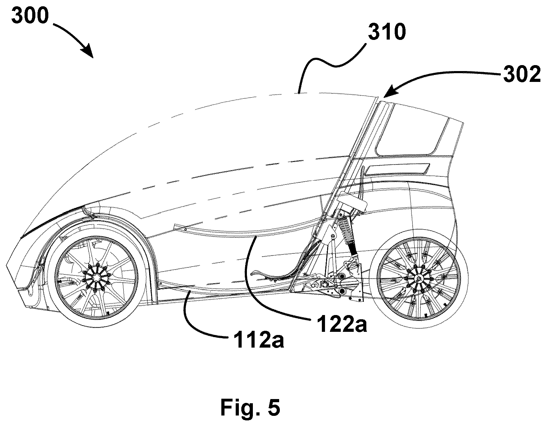

Turning now to Figure 1, it shows a hinge system embodiment 100 that can be installed on a velomobile 300 and used for manoeuvring a canopy 310 to and from a closed position on the velomobile 300, where the velomobile 300 and canopy can be seen in Figs 4a, 4b and 5. The hinge system 100 includes two hinges 110,120 for rotating the canopy 310 on the velomobile 300. A support 101 is also shown (the reference numeral 101 can be found near to the top right corner of Figure 1) and it can be useful for installing the hinge system 100 on the velomobile 300.

To facilitate the explanation of Figure 1, the two hinges 110,120 are separately referred herein as the first hinge 110 and the second hinge 120. The two hinges 110,120 operate in parallel, and each of them is adapted to rotate the canopy 310 relative to the velomobile 300 about an axis of rotation. The first hinge 110 rotates about a first axis of rotation 111 and the second hinge 120 rotates about a second axis of rotation 121. Both axes of rotation 111,121 are, in a position of use, positioned substantially horizontal relative to the velomobile 300.

Each hinge 110,120 comprises a pair of arms/elongated pieces 112a, 112b, 122a, 122b for supporting the canopy at a radius from the axis of rotation 111,121 of the respective hinge 110,120. The parallel rotation of the two hinges 110,120 is achieved by having the pair of arms 112a, 112b of the first hinge 110 rotate two connection points on the canopy 310 around the first axis of rotation 111 while the pair of arms 122a, 122b of the second hinge 120 rotates, in parallel to the first hinge 110, another two connection points on the canopy 310 around the second axis of rotation 121. The first and second rotation axes of rotation 111,121 are parallel to each other.

The parallel rotation of the two hinges 110,120 enables opening and closing the canopy 310 in a robust manner. The canopy 310 can be mounted on the distal ends of the arms 112a,112b,122a,122b, *i.e.* the ends which are farthest away from the axes of rotation 111,121 (these ends can be seen closer to the bottom left corner of Figure 1). During its movement between positions, the canopy 310 has a predictable orientation relative to the velomobile 300, in which the relative orientation of the canopy 310 is either maintained constant through the entire path between closed and opened positions or it varies smoothly. The latter case can be observed, for example, when the radius of rotation of the two hinges 110,120 differs. The skilled person will know, without requiring inventive skills, many other alternative hinges for rotating, in parallel, a canopy 310 on a velomobile 300. For example, an alternative hinge may have less or more than two connection points on the canopy 310, such as an alternative hinge having three or only one arm(s) rotating about a rotation axis of the alternative hinge.

The optional support 101 shown in Figure 1 facilitates the installation of the hinge system 100 on a velomobile 300, and it has other advantages such as contributing to the structural stiffness of the velomobile and separating the assembly process of the hinge system 100 from the assembly of the hinge system 100 on the velomobile 300. The hinge system 100 can be installed on a velomobile 300 by fastening the support 101 to the velomobile 300 and by fastening a canopy 310 to the ends of the hinge arms 112a, 112b, 122a, 122b. The skilled person will not require inventive skills to find alternatives for providing a hinge system embodiment 100 on a velomobile 300. For example, the hinges 110,120 may be provided directly on the velomobile 300 without a need to include the support 101 shown in Figure 1.

In the hinge system embodiment 100 shown in Figure 1, the second hinge 120 is different than the first hinge 110. The second hinge 120 includes two telescoping mechanisms 200 for allowing the adjustment of the radius between the connection point of the canopy 310 and the second axis of rotation 121. The positions of the telescoping mechanisms 200 are generally indicated in Figure 1 by the reference numerals "200" and circles. It can be observed that the telescoping mechanisms 200 are positioned at the distal ends of the arms 122a,122b of the second hinge 120, the distal ends being the ends of the arms 122a,122b which are farthest away from the second axis of rotation 121.

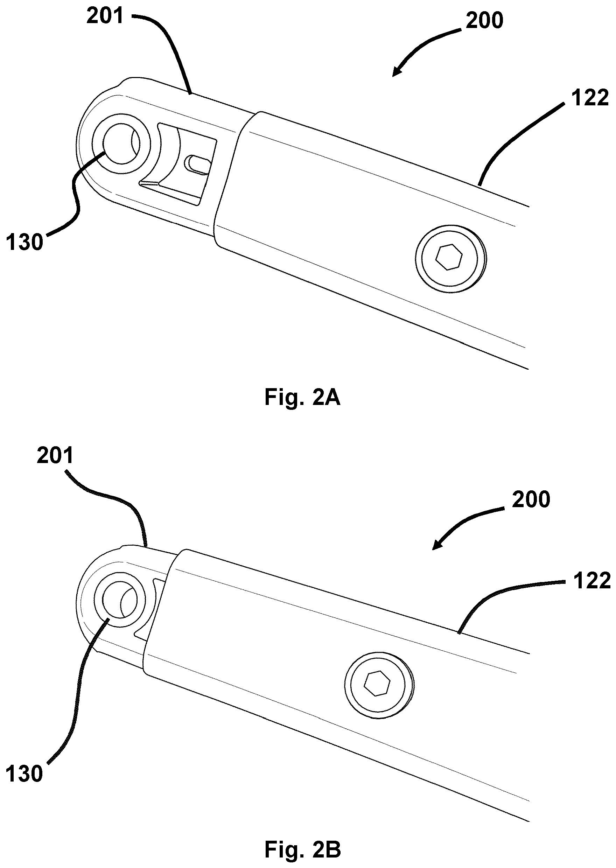

The telescoping mechanism embodiment 200 shown in Figures 2A and 2B will now be described with the purpose of making the functioning of the telescoping mechanisms 200 in Figure 1 more apparent.

Figures 2A and 2B show an embodiment of the telescoping mechanism 200 that can be included in the second hinge 120 of the hinge system 100 shown in Figure 1. From the same point of view, Figures 2A and 2B show a distal end portion of an arm 122 (observable on the right-hand half in Figures 2A-2B) of the second hinge 120 and a connection piece 201 (observable on the left-hand side of the figures, telescopically sliding out of the distal end of the arm 122) for connecting the arm 122 of the second hinge 120 to the canopy 310.

The connection piece 201 shown in Figures 2A-2B is adapted to include a hole 130 through the connection piece 201. For example, this hole 130 can be used for receiving a fastening component to connect the second hinge 120 to a connection point on the canopy 310. In another example, this hole 130 can be useful for receiving an axle connected to a rotary joint on the canopy 310.

The telescoping end portion 200 is shown in an extended position in Figure 2A and in a retracted position in Figure 2B. This can be visualized by comparing the size of the exposed portion of the connection piece 201 in Figure 2A with the size in Figure 2B. From Figures 1, 2A and 2B, it can be observed that, as the extension of the telescoping mechanism 200 changes relative to the arm 122, the distance/radius between the hole 130 of the connection piece 201 and the second axis of rotation 121 will also change. Thus, in Figure 2A the connection piece 201 supports the canopy 310 at a longer radius from the second axis of rotation 121 shown in Figure 1 than it does in Figure 2B. Therefore, the telescoping mechanisms 200 allow increasing and reducing the radius of a connection point on the canopy 310 rotating around the second axis of rotation 121.

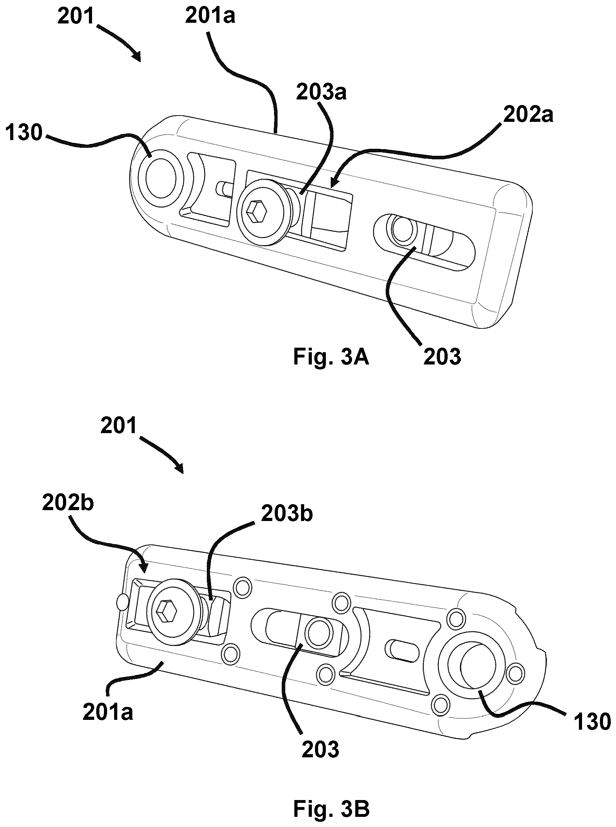

Figures 3A and 3B show the connection piece 201 from the telescoping mechanism 200 in Figure 2A and 2B when seen from two opposite points of view, *i.e.* between Figure 3A and 3B, the connection piece 201 is rotated 180 degrees around its longitudinal axis.

In the shown embodiment, the connection piece 201 includes an outer surface 201a that matches the interior surface of the arm 122 shown in Figures 2A-2B. The contact between the outer surface 201a of the connection piece 201 and the inner surface of the arm 122 is such that the connection piece 201 can slide telescopically inside the distal end of the arm 122.

In particular, the outer surface 201a of the connection piece 201 and the inner surface of the arm 122 are shaped so that the connection piece 201 is restricted to move only on one degree of freedom, *i.e.* along the length axis of the arm 122. In the shown embodiment, it can be seen that the outer surface 201a of the connection piece 201 has a cross section across the longitude of the arm 122 with a substantially elliptical shape. This causes the connection piece 201 to only be slidable longitudinally relative to the arm 122. For example, the connection piece 201 is restricted from rotating about a longitudinal axis of the arm 122, which may not be possible if the outer surface 201a had a cross section with a circular shape.

The movements of the connection piece 201 relative to the arm 122 are further constrained in the longitudinal direction by providing two channels/grooves 202a,202b in the longitudinal direction of connection piece 201, each of the channels 202a,202b being shaped for receiving a matching protrusion 203a, 203b, such as a bolt, pin or screw, the protrusion 203a,203b having a shape for moving through the channel 202a,202b. When the connection piece 201 slides relative to the arm 122, the connection piece 201 is guided by the channels 202a,202b and protrusions 203a,203b, the combined channels 202a, 202b and protrusions 203a, 203b defining longitudinal end positions of the telescoping mechanism 200.

In the connection piece embodiment 201 shown in Figures 3A and 3B, each protrusion 203 is shown in the form of a nut provided on a bolt. In particular, each nut 203 is adapted with an outer shape for matching a channel 202 (in Figures 3A-3B, the nuts shown are cube shaped, *i.e.* with a square cross-section). The bolt is thereby accessible from the outside of the arm 122. This embodiment is useful for providing a protrusion 203 that can be fastened to an arm 122 in a simple manner. The skilled person will know, without requiring inventive skills, many other possible designs for providing a channel 202 and a protrusion 203 to constrain the possible movements of the connection piece 201.

The skilled person will also know ways of further adapting the telescoping mechanism 200 to achieve additional effects.

An embodiment of the telescopic mechanism 200 may be adapted to dampen the sliding movements that the connection piece 201 can perform within the distal end portion of the arm 122 of the second hinge 120. It can be helpful to visualize such a telescopic mechanism embodiment 200 with the reference to Figures 2A-2B. Instead of being loose and freely movable between the two positions show in Figure 2A and 2B, the connection piece 201 may still be allowed to move when subjected to a force, but the movements may be constrained (*i.e.* dampened) with friction. The skilled person will know several options for achieving the friction effect, such as providing the connection piece 201 with at least one rubber contact (*e.g*. a rubber ring) that frictions against the inner surface of arm 122. This is advantageous in that the position changes of the telescopic mechanism 200 are performed in a manner that is more stable. Moreover, the ability to minimize loose movements of the connection piece 201 can be advantageous in minimizing damage and wear caused on the telescoping mechanism 200. Furthermore, the movements of the connection piece 201 are dampened and less sensitive to sudden forces caused on the canopy 310 by, for example, wind when the canopy 310 is open.

Another embodiment of the telescopic mechanism 200 may be adapted to maintain the connection piece 201 biased towards a position, such as the extended position shown in Figure 2A or the retracted position shown in Figure 2B. The skilled person will know many ways of achieving this, such as by providing an elastic body within the distal end portion of the arm 122 of the second hinge 120. Examples of such an elastic body may be a spring, a cylinder with a compressed gas or any other known elastic mechanism suitable for biasing the connection piece 201 towards a position. Maintaining the connection piece 201 biased towards a position while still allowing sliding movements can have similar advantages to those observed when dampening the sliding movements with friction. In addition, a velomobile manufacturer will have the possibility of defining a predictable position at which the connection piece 201 is to be maintained.

Figures 4A and 4B show a velomobile embodiment 300 including a canopy 310 in an open position and a closed position, respectively. The canopy 310 is installed on a hinge system embodiment 100 similar to the one shown in Figure 1, and the hinge system 100 is installed on the velomobile 300.

In Figure 4A, it is possible to observe two of the arms 112a,122a supporting the canopy 310 in an open position, with which a user may easily enter and leave the velomobile 300. It can also be observed that the canopy 310 is shaped to match the profile of the closed position on the velomobile 310, including lowered lateral sides to enclose the user within a cabin, possibly fully sealed, when the canopy 310 is moved to a closed position.

Also, Figure 4A shows a part of the velomobile 300 that is sustaining a bending effect caused by the user's weight. Specifically, the bottom plate 301 of the velomobile 300 can be observed with a curved profile, which is slightly exaggerated for illustrative purposes in the figure. Contrastingly, the bottom plate 301 typically shows a substantially straight profile when there is no user or load inside the velomobile 300. The velomobile 300 can thus be produced with lighter, bendable parts and have a lower total weight, which is advantageous for both the velomobile manufacturer and its user. Also, the design of lowered sides for the velomobile 300 is advantageous for the user in that it allows the user to enter and exit the velomobile 300 in a comfortable manner, even though the bending effect on the bottom plate 301 may be observed when the user is on the velomobile 300. In the open position, the arms 112a, 122a extend substantially vertically.

As explained above, when the canopy 310 is maneuvered to be closed, the close position on a bent velomobile 300 is not the same as it would be on a non-bent velomobile, and it may thus not be possible to close the canopy 310 more precisely when a user is sitting in the velomobile 300.

In Figure 4B, the canopy 310 has been moved to the closed position on the bent velomobile 300. Some of the elements of the velomobile 300 have been made transparent and the user has been hidden for illustrative purposes. It is possible to observe the new, substantially horizontal positions of the arms 112a,122a, the canopy 310 and that the bottom plate 301 is bent due to the user's weight.

It is possible to observe in Figure 4B that the velomobile 300 may be bent due the user's weight while the canopy 310 can still work as a portion of a fairing having a good aerodynamic performance, the canopy 310 having its front and back portions aligning well with the velomobile 300. To achieve this, the following actuations were carried out while closing the canopy:
- Using the supported motion provided by the hinge system 100, the canopy 310 shown in Figure 4A was maneuvered towards the closed position on the bent velomobile 300 (shown in Figure 4B).
- When the canopy 310 started making contact with the bent velomobile 300, a misalignment between the canopy and the velomobile was observed. At this moment, the hinge system 100 was used for adjusting the radius between the respective connections points on the canopy 310 and the axis of rotation 121 of the second hinge 120. These radial adjustments caused a change on the orientation of the canopy 310 relative to the bent velomobile 300 and thus mitigated the misalignment observed between the canopy 310 and the velomobile 300 when closing the canopy 310. The radial adjustment could have been to increase or decrease the radius, depending on the misalignment that happened between the canopy 310 and the bent velomobile 300.

Taking now a general view of the solution, it can be observed that it is advantageous to provide the hinge system 100 with the ability to adjust a radius between the canopy 310 and the axis of rotation of at least one of its hinges. A velomobile manufacturer can thus solve the challenge of mitigating misalignments between the canopy 310 and the velomobile 300 when closing the canopy 310 at the same time the velomobile 300 is bent due to a user's weight. This challenge solution does not require any changes to stiffen the velomobile and constrain it from bending due to a user's weight. Bending effects caused in this manner are in fact accepted by the manufacturer and can be used for making the velomobile lighter.

The telescoping mechanisms 200 provide a simple solution. With the help of the telescoping mechanisms 200, the position of the canopy 310 can be easily adjusted so that the canopy 310 is closable on the bent velomobile 300. Thus, the telescoping mechanisms 200 included in the second hinge 120 make the hinge system 1 compatible with a variety of closed positions of the canopy 310 on the velomobile 300.

For the purpose of mitigating misalignments between the canopy 310 and the velomobile 300 when closing the canopy 310, the skilled person will be able to find alternatives, without requiring inventive skills, to accomplish the adjustment of a radius between the canopy 310 and an axis of rotation of at least one of the hinges of the hinge system 100.

For example, the hinge system 100 could have all its hinges include telescoping mechanisms 200. In particular, the first hinge 110 in Figure 1 could also be provided with telescoping mechanisms 200 on the ends of its arms 112a, 112b that are farthest away from the axis of rotation 111 of the first hinge 110.

Optionally, the arms 112a, 112b, 122a, 122b can be made of a flexible material, for example fibre glass, aluminium or carbon fibre. A flexible arm allows changing a radius between the canopy 310 and the axis of rotation of the respective hinge. Thus, with at least one hinge including flexible arms, an adjustment of the canopy 310 position to a closed position on a bent velomobile 300 can be accomplished by bending the flexible arms. The arms 112a,112b,122a,122b could be provided in alternative or addition to the telescoping mechanism 200 described above. Providing flexible arms can be advantageous in that it adds low complexity to the manufacturing process of the hinge system 100, although it may result in some instability of an opened canopy 310 in windy conditions, for example.

It can thus be advantageous to calibrate the flexibility of the flexible arms so that it accomplishes a hinge system 100 that is both successful when closing the canopy 310 and robust in withstanding reasonable lateral forces, such as forces created by wind or gravity, when the canopy is opened.

Figure 5 shows a velomobile 300 including a canopy 310 and another hinge system embodiment 100.

The hinge system 100 is similar to hinge system embodiments 100 described above. One difference is that the hinge system 100 in Figure 5 includes a fastening device (not visible in Figure 5) for fastening the canopy 310 to the velomobile 300 when the canopy 310 is on the closed position. Including the fastening device can be useful in that e.g. the canopy 310 is maintained closed while riding the velomobile 300 over turbulent ground and/or in windy situations, in which the canopy 310 could open inadvertently.

The fastening device is operable in two modes of fastening:
- A sealed mode, in which the canopy 310, on the closed position, forms a seal against the velomobile 300. This mode is useful for creating a cabin with clean air, in which the velomobile 300 can be provided with a filtered intake of air.
- A ventilated mode, in which the canopy 310, on the closed position, is misaligned with the velomobile 300 on purpose, so that an opening 302 is created between the canopy 310 and the velomobile 300 for providing ventilation through the opening 302. Figure 5 shows an example in which the canopy 310 is positioned with the (not shown) fastening device being operated in the ventilated mode. The opening 302 allows increasing the air exchange between the interior and the exterior of the cabin formed under the canopy 310. The ventilated mode of the fastening device makes the velomobile 300 more practical for use in hot weather.

The two modes of fastening may be provided by adapting the fastening device to fasten the canopy 310 on two positions to the velomobile 300: a first position for the sealed mode; and a second position for the ventilated mode.

Generally, the terms used in this description and claims are interpreted according to their ordinary meaning the technical field, unless explicitly defined otherwise. Notwithstanding, the terms "comprises" and "comprising" and variations thereof mean that the specified features, steps or integers are included. These terms are not interpreted to exclude the presence of other features, steps or integers. Furthermore, the indefinite article "a" or "an" is interpreted openly as introducing at least one instance of an entity, unless explicitly stated otherwise. An entity introduced by an indefinite article is not excluded from being interpreted as a plurality of the entity.

The features disclosed in the foregoing description, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the embodiments described above, many equivalent modifications and variations will be apparent to those skilled in the art when given this disclosure. Accordingly, the embodiments of the invention set forth above are considered to be illustrative and not limiting. Various changes to the described embodiments may be made without departing from the scope of the invention as defined by the appended claims.

## Claims

1. A vehicle (300) comprising:
- a canopy (310); and
- a hinge system (100) for manoeuvring the canopy (310) to and from a closed position on the vehicle (300),
wherein the hinge system (100) comprises:
- at least two hinges (110,120) operating in parallel, each hinge (110,120) being for rotating the canopy (310) relative to the vehicle (300) about an axis of rotation (111,121),
wherein a radius between the canopy (310) and the axis of rotation (111,121) of at least one of the hinges (110,120) is adjustable,
wherein each hinge (110,120) having an adjustable radius between the canopy (310) and the axis of rotation (111,121) of the hinge (110,120) comprises a telescoping mechanism (200) for changing the adjustable radius,
wherein the telescoping mechanism (200) comprises:
- a connection piece (201) adapted to be connected to the canopy (310), and
wherein the connection piece (201) comprises a surface (201a) for matching a slidable surface on the hinge (110,120) so that the radius between the canopy (310) and the axis of rotation (111,121) of the hinge (110,120) is changeable by sliding the connection piece (201) on the hinge (110, 120),
**characterized in that** the vehicle (300) is a velomobile (300) wherein said radius of the hinges (110,120) is adjustable for mitigating a misalignment between the canopy (310) and the velomobile (300) when closing the canopy (310).

2. Velomobile according to claim 1, wherein the slidable surface is shaped so that the connection piece is allowed to have only one degree of freedom when sliding on the hinge.

3. Velomobile according to any of the claims 1 to 2, wherein the connection piece and the hinge comprise a channel on one of them and a protrusion on the other, and wherein the channel and the protrusion are adapted so that, when the connection piece slides on the hinge, the connection piece is guided by the protrusion moving through the channel.

4. Velomobile according to any of the claims 1 to 3, wherein each hinge having an adjustable radius between the canopy and the axis of rotation of the hinge is adapted to allow the adjustment of the radius by at most two centimetres.

5. Velomobile according to any of the preceding claims, wherein each hinge comprises at least one elongated piece for supporting the canopy at a radius from the axis of rotation of the hinge.

6. Velomobile according to claim 5, wherein at least one hinge comprises at least two elongated pieces, each of the at least two elongates pieces being for supporting the canopy at a radius from the same axis of rotation of the hinge.

7. Velomobile according to any of the claims 5 to 6, wherein each elongated piece comprises a flexible material so that the radius at which the canopy is supported by the elongated piece is changeable by bending the elongated piece.

8. Velomobile according to claim 7, wherein the flexible material is any of fibre glass, aluminium or carbon fibre.

9. Velomobile according to any of the preceding claims, wherein each hinge comprises a rotary joint for connecting the hinge with the canopy.

10. Velomobile according to any of the preceding claims, the hinge system comprising:
- at least one fastening device for fastening the canopy to the velomobile when the canopy is on the closed position,
wherein the at least one fastening device is operable in at least the following modes of fastening:
- a sealed mode wherein the canopy, on the closed position, forms a seal against the velomobile; and
- a ventilated mode wherein the canopy, on the closed position, is misaligned with the velomobile so that an opening is created between the canopy and the velomobile for providing ventilation through the opening.

11. Velomobile according to claim 10, wherein the at least one fastening device is adapted to fasten the canopy on a first position for the sealed mode and a second position for the ventilated mode.

## Patentansprüche

1. Fahrzeug (300), umfassend:
- ein Verdeck (310); und
- ein Scharniersystem (100) zum Manövrieren des Verdecks (310) aus und in eine geschlossene Position auf dem Fahrzeug (300),
wobei das Scharniersystem (100) umfasst:
- mindestens zwei Scharniere (110, 120), die parallel arbeiten, wobei jedes Scharnier (110, 120) zum Drehen des Verdecks (310) in Bezug auf das Fahrzeug (300) um eine Drehachse (111, 121) dient,
wobei ein Radius zwischen dem Verdeck (310) und der Drehachse (111, 121) mindestens eines der Scharniere (110, 120) einstellbar ist,
wobei jedes Scharnier (110, 120), das einen einstellbaren Radius zwischen dem Verdeck (310) und der Drehachse (111, 121) des Scharniers (110, 120) aufweist, einen Teleskopmechanismus (200) zum Ändern des einstellbaren Radius umfasst,
wobei der Teleskopmechanismus (200) umfasst:
- ein Verbindungsstück (201), das dazu angepasst ist, mit dem Verdeck (310) verbunden zu werden, und
wobei das Verbindungsstück (201) eine Fläche (201a) zum Anpassen einer Gleitfläche auf dem Scharnier (110, 120) umfasst, sodass der Radius zwischen dem Verdeck (310) und der Drehachse (111, 121) des Scharniers (110, 120) durch Gleiten des Verbindungsstücks (201) auf dem Scharnier (110, 120) geändert werden kann, **dadurch gekennzeichnet, dass** das Fahrzeug (300) ein Velomobil (300) ist, wobei der Radius der Scharniere (110, 120) einstellbar ist, um eine Fehlausrichtung zwischen dem Verdeck (310) und dem Velomobil (300) beim Schließen des Verdecks (310) abzuschwächen.

2. Velomobil nach Anspruch 1, wobei die Gleitfläche so geformt ist, dass das Verbindungsstück beim Gleiten auf dem Scharnier nur einen Freiheitsgrad aufweisen kann.

3. Velomobil nach einem der Ansprüche 1 bis 2, wobei das Verbindungsstück und das Scharnier auf einem davon einen Kanal und auf dem anderen davon einen Vorsprung umfassen, wobei der Kanal und der Vorsprung so angepasst sind, dass das Verbindungsstück beim Gleiten des Verbindungsstücks auf dem Scharnier von dem Vorsprung geführt wird, der sich durch den Kanal bewegt.

4. Velomobil nach einem der Ansprüche 1 bis 3, wobei jedes Scharnier, das einen einstellbaren Radius zwischen dem Verdeck und der Drehachse des Scharniers aufweist, dazu angepasst ist, die Einstellung des Radius um höchstens zwei Zentimeter zu ermöglichen.

5. Velomobil nach einem der vorstehenden Ansprüche, wobei jedes Scharnier mindestens ein längliches Stück zum Stützen des Verdecks bei einem Radius von der Drehachse des Scharniers umfasst.

6. Velomobil nach Anspruch 5, wobei mindestens ein Scharnier mindestens zwei längliche Stücke umfasst, wobei jedes der mindestens zwei länglichen Stücke zum Stützen des Verdecks bei einem Radius von derselben Drehachse des Scharniers dient.

7. Velomobil nach einem der Ansprüche 5 bis 6, wobei jedes längliche Stück ein flexibles Material umfasst, sodass der Radius, bei dem das Verdeck von dem länglichen Stück gestützt wird, durch Biegen des länglichen Stücks geändert werden kann.

8. Velomobil nach Anspruch 7, wobei das flexible Material ein beliebiges aus Glasfaser, Aluminium oder Kohlefaser ist.

9. Velomobil nach einem der vorstehenden Ansprüche, wobei jedes Scharnier ein Drehgelenk zum Verbinden des Scharniers mit dem Verdeck umfasst.

10. Velomobil nach einem der vorstehenden Ansprüche, wobei das Scharniersystem umfasst:
- mindestens eine Befestigungsvorrichtung zum Befestigen des Verdecks am Velomobil, wenn das Verdeck in der geschlossenen Position ist,
wobei die mindestens eine Befestigungsvorrichtung in mindestens den folgenden Befestigungsmodi betreibbar ist:
- einem abgedichteten Modus, bei dem das Verdeck in der geschlossenen Position eine Abdichtung gegenüber dem Velomobil bildet; und
- einem belüfteten Modus, bei dem das Verdeck in der geschlossenen Position mit dem Velomobil fehlausgerichtet ist, sodass eine Öffnung zwischen dem Verdeck und dem Velomobil erzeugt wird, um eine Lüftung durch die Öffnung bereitzustellen.

11. Velomobil nach Anspruch 10, wobei die mindestens eine Befestigungsvorrichtung dazu angepasst ist, das Verdeck für den abgedichteten Modus auf einer ersten Position und für den belüfteten Modus auf einer zweiten Position zu befestigen.

## Revendications

1. Véhicule (300) comprenant :
- un auvent (310) ; et
- un système de charnière (100) pour manoeuvrer l'auvent (310) vers et depuis une position fermée sur le véhicule (300),
dans lequel le système de charnière (100) comprend :
- au moins deux charnières (110, 120) fonctionnant en parallèle, chaque charnière (110, 120) permettant de faire pivoter l'auvent (310) par rapport au véhicule (300) autour d'un axe de rotation (111, 121),
dans lequel un rayon entre l'auvent (310) et l'axe de rotation (111, 121) d'au moins une des charnières (110, 120) est réglable,
dans lequel chaque charnière (110, 120) présentant un rayon réglable entre l'auvent (310) et l'axe de rotation (111, 121) de la charnière (110, 120) comprend un mécanisme télescopique (200) pour modifier le rayon réglable,
dans lequel le mécanisme télescopique (200) comprend :
- une pièce de liaison (201) conçue pour être reliée à l'auvent (310), et
dans lequel la pièce de liaison (201) comprend une surface (201a) destinée à correspondre à une surface coulissante de la charnière (110, 120) de sorte que le rayon entre l'auvent (310) et l'axe de rotation (111, 121) de la charnière (110, 120) puisse être modifié en faisant glisser la pièce de liaison (201) sur la charnière (110, 120),
**caractérisé en ce que** le véhicule (300) est un vélomobile (300) dans lequel le rayon des charnières (110, 120) est réglable pour atténuer le désalignement entre l'auvent (310) et le vélomobile (300) lors de la fermeture de l'auvent (310).

2. Vélomobile selon la revendication 1, dans lequel la surface coulissante est formée de sorte que la pièce de liaison ne dispose que d'un seul degré de liberté lorsqu'elle glisse sur la charnière.

3. Vélomobile selon l'une quelconque des revendications 1 à 2, dans lequel la pièce de liaison et la charnière comprennent un canal sur l'une d'elles et une saillie sur l'autre, et dans lequel le canal et la saillie sont conçus de sorte que, lorsque la pièce de liaison glisse sur la charnière, la pièce de liaison est guidée par la saillie qui se déplace dans le canal.

4. Vélomobile selon l'une quelconque des revendications 1 à 3, dans lequel chaque charnière présentant un rayon réglable entre l'auvent et l'axe de rotation de la charnière est conçue pour permettre le réglage du rayon d'au plus deux centimètres.

5. Vélomobile selon l'une quelconque des revendications précédentes, dans lequel chaque charnière comprend au moins une pièce allongée pour soutenir l'auvent à un rayon de l'axe de rotation de la charnière.

6. Vélomobile selon la revendication 5, dans lequel au moins une charnière comprend au moins deux pièces allongées, chacune des au moins deux pièces allongées étant destinée à supporter l'auvent à un rayon du même axe de rotation de la charnière.

7. Vélomobile selon l'une quelconque des revendications 5 et 6, dans lequel chaque pièce allongée comprend un matériau souple de sorte que le rayon auquel l'auvent est supporté par la pièce allongée puisse être modifié en pliant la pièce allongée.

8. Vélomobile selon la revendication 7, dans lequel le matériau souple est une fibre de verre, d'aluminium ou de carbone.

9. Vélomobile selon l'une quelconque des revendications précédentes, dans lequel chaque charnière comprend un joint rotatif pour relier la charnière à l'auvent.

10. Vélomobile selon l'une quelconque des revendications précédentes, le système de charnière comprenant :
- au moins un dispositif de fixation pour fixer l'auvent au vélomobile lorsque l'auvent est dans la position fermée,
dans lequel l'au moins un dispositif de fixation peut être utilisé dans au moins les modes de fixation suivants :
- un mode étanche dans lequel l'auvent, dans la position fermée, forme un joint contre le vélomobile ; et
- un mode ventilé dans lequel l'auvent, dans la position fermée, est désaligné par rapport au vélomobile de manière à créer une ouverture entre l'auvent et le vélomobile pour assurer la ventilation à travers l'ouverture.

11. Vélomobile selon la revendication 10, dans lequel l'au moins un dispositif de fixation est conçu pour fixer l'auvent dans une première position pour le mode étanche et dans une seconde position pour le mode ventilé.
